# EUROPEAN PATENT APPLICATION

(11) **EP 1 720 366 A2**
(43) Date of publication of application: **08.11.2006**
(21) Application number: 06380095.7
(22) Date of filing: 26.04.2006
(51) Int. Cl.: H04Q 7/32

(54) **System of remote access of mobile equipment to mobile telephony services**

(30) Priority: 06.05.2005 ES 200501092
(71) Applicant: Vodafone Group PLC, Newbury Berkshire RG14 2FN (GB); Vodafone Espana, S.A., 28108 Alcobendas, Madrid (ES)
(72) Inventor: Portasany Sanchez, Carlos, 28037 Madrid (ES); Contreras Alvarez, Francisco, 28022 Madrid (ES); Gomez Diaz, Consuelo, 28980 Parla - Madrid (ES)
(74) Representative: Carvajal y Urquijo, Isabel

(57) **Abstract**

The invention relates to a system of remote access of a mobile equipment to mobile telephony services, said mobile equipment comprising at least one mobile terminal and one smart card (7), and comprising a resident application (10) in said mobile equipment. The system comprises:
- means of receiving at least one command Pi relating to a mobile telephony service sent by a subscriber (1) of said mobile equipment,
- means of processing said at least one command,
- means of performing at least one task so as to provide said subscriber of said mobile equipment said required service.

The invention also relates to a method for the remote access of a mobile equipment to mobile telephony services.

## Description

### Field of the Invention

The present invention is comprised within the field of mobile telecommunications, and more specifically in sending commands to mobile equipment and receiving information related to the command.

### Background of the Invention

Today, mobile telephones usually include a smart card comprising elements that are essential to the operation of the telephone. A subscriber "mobile equipment" can be referred to, comprising both in GSM (Global System for Mobile Communication) and in GPRS (General Packet Radio Service) and UMTS (Universal Mobile Telecommunications System - also called "Third Generation Mobile Telephony") systems:
- on one hand, a terminal (which is many times referred to as "mobile telephone" and which includes a casing, display, keypad, power source and various circuits); and
- on the other hand, the smart card.

A smart card comprises an electronic device similar to a PC with regard to its architecture, but inserted in a plastic card. Smart cards are based on an integrated circuit having the following elements embedded therein:
- CPU: Central Processing Unit. It may further incorporate a cryptoprocessor.
- Volatile Memory: this is the memory unit used for temporary data storage. It is usually a RAM memory.
- Non-Volatile Memory: this memory stores data permanently. It is used for the storage of directories, files and applications or programs, as is the case with a standard PC hard drive. There are usually two types of memory within this group:
   - ROM memory: it cannot be erased and some applications required for starting up the card are usually loaded in it;
   - EEPROM memory: it can be written and erased, although it has a lifetime depending on the number of writings carried out therein. Directories, files, and some applications are usually stored in this memory.
- Input/output unit: element through which the card can communicate with an external device, for example with a mobile terminal, a card reader, etc.

Communication of the smart card with different external devices is based on 5-byte commands which indicate the action to be performed. The command is occasionally accompanied by the data required for performing the action, for example, updating a file in the card. Other times, it is the card that must return data to the device that requested the action, for example when the reading of a file is involved.

As occurs in a PC, it is possible to install several applications of any type in a smart card, for example:
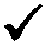 electronic wallet applications;
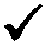 subscriber data management applications;
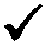 security applications.

All the information relating to the operation and architecture of smart cards is comprised in ISO 7816 standards (from part 1 to part 9).

The smart card used in a mobile telephone must also have a SIM application (in the case of GSM/GPRS), or a USIM application (in the case of UMTS) installed, or both.

The SIM (Subscriber Identity Module) application is a module or application that authenticates the GSM/GPRS network subscriber in the network and stores personal subscriber information. The USIM (Universal Subscriber Identity Module in UMTS) application carries out the same functions as the SIM application, but for the UMTS network.

The following are included among its most important functions:
- It stores the subscriber code required for the subscriber's univocal identification in the network. Said code is known as the IMSI (International Mobile Subscriber Identity)
- It carries out the algorithms for authenticating the subscriber in the corresponding network.
- It calculates the keys for encrypting communication.
- It manages PINs and their unblocking keys.
- It stores and manages information relating to the operator.
- It stores and manages subscriber information: telephone book, short messages, etc.

All the information regarding the SIM application is included in the 3GPP TS 51.011 standard. Information relating to the USIM application is comprised in the ETSI TS 102 221 and 3GPP TS 31.102 standards.

At first, mobile terminals were only able to send commands to the cards, whereas the cards were only able to respond to commands received from the mobile terminal. Then there was an evolution in mobile terminals and in cards which allowed both of them to send commands as well as receive them. It was thus achieved that a U/SIM application was able to request a mobile terminal to send a short message, to make a call, etc. This functionality therefore allows developing applications in the card (i.e. that are loaded on the card, remotely or locally) and which manage mobile telephony peripherals (display, keypad, sending short messages, making calls, etc.), opening the doors to new applications providing added value to the mobile equipment.

These applications existing in the card and capable of sending commands to the mobile terminal are known as "SIM Application Toolkit" when they are supported on SIM and "USIM Application Toolkit" when they are supported on USIM.

U/SIM Application Toolkits are an optional feature both of SIM and USIM applications. High-level procedures, command contents and encoding are suitably specified in the 3GPP TS 51.014 standard for a SIM application or in the 3GPP TS 31.111 for a USIM application.

On the other hand, there are several mechanisms which allow sending data/commands to said U/SIM Application Toolkits. Some of them are discussed below:

### 1.- Through Short Messages

It is possible to send short messages configured to be stored mandatorily in the U/SIM short message file from which a U/SIM Application Toolkit could recover them.

It is also possible to send short messages which go directly to the U/SIM application when they reach the terminal without leaving any evidence therein, and without the subscriber being informed of the arrival thereof. This functionality belongs to the U/SIM Toolkit standard and is known as SMS-PP Data Download.

### 2.- Through Cell Broadcast Messages

This is also a functionality that belongs to the U/SIM Toolkit standard known as Cell Broadcast Data Download and allows all cell broadcast messages having a certain identifier (the value of which is stored in a file in the Card) to be passed directly to the U/SIM application.

### 3.- Through a Reader

It is possible to select the U/SIM Application Toolkit with which to communicate and to send commands to it APDU format through a reader, as specified in ISO 7816 1-9.

### 4.- Through a MIDlet

A MIDIet is a small Java application executed on a virtual machine adapted to small devices, particularly mobile terminals. These MIDlets have remote connection abilities which the terminal puts at their service. They must at least support http connection.

All information related to these MIDlets, their programming and operation as well as the operation of the virtual machine on which they are executed is within J2ME (Java 2 Platform Micro Edition) technology.

The JSR-177 standard "Security and Trust Services API for J2ME" specifies the way these MIDIets can communicate with U/SIM Application Toolkits.

### 5.- Through the Bearer Independent Protocol Mechanism

This U/SIM Toolkit mechanism allows a U/SIM Application Toolkit to establish a data channel with a remote server. This mechanism supports the use of a large number of different carriers such as: Bluetooth, IrDA, GPRS, CSD, RS-232, USB...

In the event of using Short Message and Cell Broadcast Message sending carriers there is also a standard that specifies security mechanisms which allow sending information to the card in a secure manner. Said standard is 3GPP TS 23.048.

French patent application FR-2805912-A1 relates to a process of controlling a smart card through a mobile terminal, using a program stored in a remote server. In the case of French patent application FR-2805912-A1, the commands received by the smart card mainly result in executing a (U)SIM Toolkit command or they are supplementary to the execution of one of these commands; its main object is to replace the passive utility menus loaded in the smart card with dynamic utilities loaded by means of short messages.

Many patents have been located in which the mobile telephone was used as a remote control device for the purpose of controlling systems which, for the most part, are of a domestic nature: televisions, boilers, etc... The Short Message Service was also used in some of these patents as a carrier.

It is well-known that abbreviations and acronyms are frequently used in the mobile telephony field. Below is a glossary of acronyms/terms used throughout the present specification:
- 3GPP: The 3rd Generation Partnership Project
- APDU: Application Protocol Data Unit
- CCP: Capability Configuration Parameter
- CSD: Circuit Switched Data
- ETSI: European Telecommunications Standards Institute
- GPRS: General Packet Radio Service
- GSM: Global System for Mobile Communications
- HTTP: Hyper Text Transfer Protocol
- IMSI: International Mobile Subscriber Identity
- IrDA: Infrared Data Association
- JSR: Java Specification Request
- MSISDN: Mobile Station International ISDN Number
- OTA: Over The Air
- PIN: Personal Identification Number
- PP: Point-to-Point
- U/SAT: U/SIM Application Toolkit
- U/SIM: UMTS Subscriber Identification Module
- SM: Short Message
- SMSC: Short Message Service Center
- SS: Supplementary Service
- UMTS: Universal Mobile Telecommunications System
- URL: Universal Resource Locator
- U/SAT: U/SIM Application Toolkit
- USB: Universal Serial Bus
- USSD: Unstructured Supplementary Service Data
- WAP: Wireless Application Protocol

### Description of the Invention

The invention relates to a system of remote access to mobile telephony services of a mobile telephone equipment according to claim 1, and to a method according to claim 8. Preferred embodiments of the system and of the method are defined in the dependent claims.

The present invention provides a system allowing a mobile equipment subscriber to remotely access his or her mobile equipment, for example when physical access is impossible. That is, the main objective of the system of the invention is to provide a mobile equipment subscriber with a service that is similar to the one he or she would have if he or she had the equipment nearby. The problem of the defenselessness of those who forget their mobile in some place and depend on it to work, travel, etc., is thus aimed to be resolved.

According to a first aspect of the invention, the invention relates to a system of remote access of a mobile equipment to mobile telephony services, said mobile equipment comprising at least a mobile terminal and a smart card, and comprising an application in said mobile equipment. The system comprises:
- means of receiving at least one command relating to a mobile telephony service sent by a subscriber of said mobile equipment,
- means of processing said at least one command on the part of said application,
- means of executing at least one task so as to provide said subscriber of said mobile equipment with said required service.

In the present invention, the tasks to be performed by the smart card or by the mobile terminal (according to where the application is located) have the purpose of keeping the owner of the mobile telephone connected despite the fact that he or she is not close to said telephone.

That is, the system is based on sending commands to the mobile equipment on the part of the subscriber. These commands can be processed by the smart card inserted in the mobile terminal or by the mobile terminal itself. At the time the corresponding command is received, the smart card or the terminal will perform the tasks needed to provide the subscriber with the required service. This mobile telephony service may be, for example:
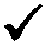 Receiving his or her calls at another number.
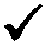 Receiving his or her short messages at another number.
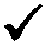 Knowing the calls received without needing to forward them to another number.
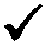 Knowing the short messages received without needing to forward them to another number.
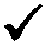 Making a call/video-call.
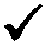 Sending a short message from his or her terminal.
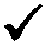 Sending a USSD chain.
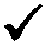 Blocking the card when lost.
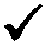 etc.

All those services allowed by technology and having the objective of allowing a subscriber to use his or her terminal as if it were in his or her possession can be included in this list.

According to a preferred embodiment of the invention, the system also comprises accessing and/or managing the subscriber data stored in said mobile equipment, such as, for example, obtaining information regarding contacts stored in the card.

Preferably, the system further comprises means of sending a result related to said processing.

The system may also comprise means of sending information relating to said required mobile telephony service or means of sending information relating to said subscriber data.

For instance, if the subscriber requests a service for obtaining contact numbers from the telephone book, the resident application will return the information regarding such numbers.

According to a preferred embodiment, the system includes access adaptation means, said access adaptation means being configured so as to receive said at least one command, adapting said command to a pre-established single format and sending said at least one command adapted to said application. That is, in this embodiment any access means can be used to access the application; these access means can be:
- through a mobile terminal by means of sending short messages,
- through Internet,
- making a call to a voice recognition system,
- etc.

In this preferred embodiment, the adaptation means pick up the commands from the subscriber through the various means and make them reach the resident application through a means that it has access to and in a format that can be understood by the application.

The system also can also include protocol adaptation means configured to implement a pre-established protocol.

Some of the services offered by the system may require, in an asynchronous manner, the smart card or the mobile terminal to send a given type of information relating to the requested service. For example, in the case of received short message and call information services, the smart card or the mobile terminal must send information regarding the same.

According to a second aspect of the invention, the invention relates to a method for remote access to telephony services of a mobile equipment, said mobile equipment comprising at least a mobile terminal and a smart card, and comprising a resident application in said mobile equipment. The method comprises:
- sending to said application at least one command relating to a mobile telephony service required by a subscriber of said mobile equipment,
- processing said at least one command on the part of said application,
- executing at least one task so as to provide said subscriber of said mobile equipment with said required service.

The method may also comprise accessing and/or managing subscriber data stored in said mobile equipment.

According to a preferred embodiment, the user is also sent the result of processing said command.

The method preferably comprises sending information relating to said required mobile telephony service or sending information relating to said subscriber data if needed.

The method may also include adapting said at least one command to a pre-established single format before sending it to said application.

In the case in which the U/SIM Toolkit Data Download mechanism is used for accessing the application, the method may further comprise implementing security mechanisms, such as those described in the 3GPP TS 23.048 standard (hereinafter referred to as Data Download 23.048).

The system of the invention can also provide a solution to situations other than those in which the terminal is lost or forgotten somewhere, since the functionality provided by it is rather ample. For instance, a telesurveillance system based on the service of making video-calls could be considered; the terminal, located in the area to be monitored, would remotely be requested to set up a video-call to the Control Center such that it would be possible to remotely observe the area in which the mobile is located.

### Brief Description of the Drawings

A series of drawings which aid in better understanding the invention and which are expressly related with an embodiment of said invention, presented as a non-limiting example thereof, are very briefly described below.
Figure 1 shows a possible architecture configuration of the system of the invention in which commands are sent directly to the application.
Figure 2 shows another possible architecture configuration of the system of the invention in which commands are sent to the application through any access means.
Figure 3 shows another possible architecture configuration of the system of the invention in which a protocol adaptor is also used to send commands to the application.
Figure 4 shows another possible architecture configuration of the system of the invention in which a logic element of the application has been added.
Figure 5 shows a possible architecture of the system for the implementation example described and the operation thereof.
Figure 6 shows operation of the RAT and OTA applications.
Figure 7 shows the processes that the RAT application can consist of.

### Description of a Preferred Embodiment of the Invention

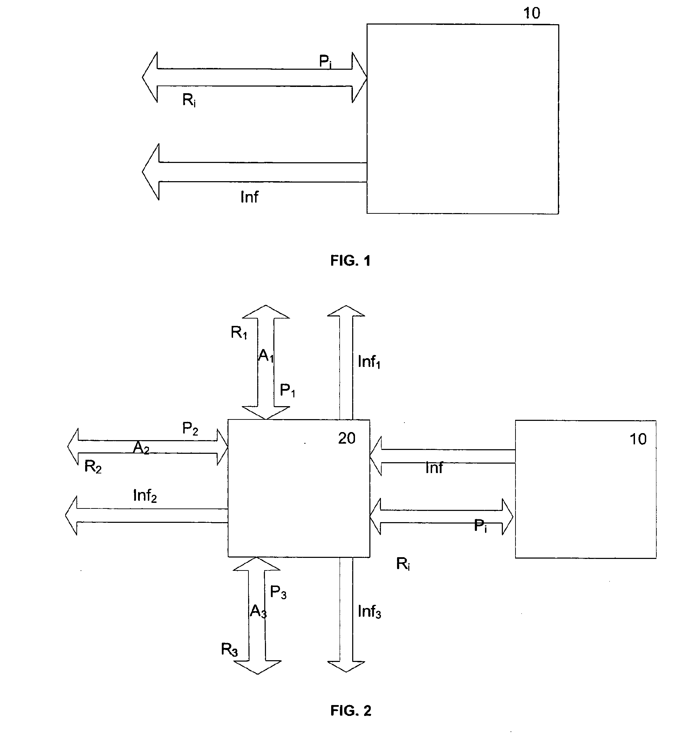

There are several possible configurations for the system of the invention. The simplest configuration is the one in which commands Pi are sent directly to the resident application 10 in the smart card or in the mobile terminal, as shown in Figure 1.

In this architecture, access means which the application also has access to and a command format that the application is able to understand are used to access the application. For instance, the subscriber can send commands Pi to the application using short messages, and the application can return the result Ri of the commands and the information Inf associated to the requested services to the subscriber also using short messages. The commands can be encoded using the short message alphabet, for example using the "DL" chain to forward calls, "DM" to forward messages, etc.

Another possible configuration is the one that allows using any access means Ai for accessing the application, as shown in Figure 2. Some examples are:
- through a mobile terminal by means of sending short messages (A₁),
- through Internet (A₂),
- making a call to a speech recognition system (A₃),
- etc.

In this configuration it is necessary to add an access means adaptor element 20 that is able to recognize commands P₁, P₂, P₃ from the subscriber through the various means and making them reach the resident application through a means that said application also has access to and in a format that the application can understand. The same would be applicable for results R₁, R₂, R₃ and information Inf₁, Inf₂, Inf₃ sent by the application. Figure 2 shows this configuration which allows using any access means.

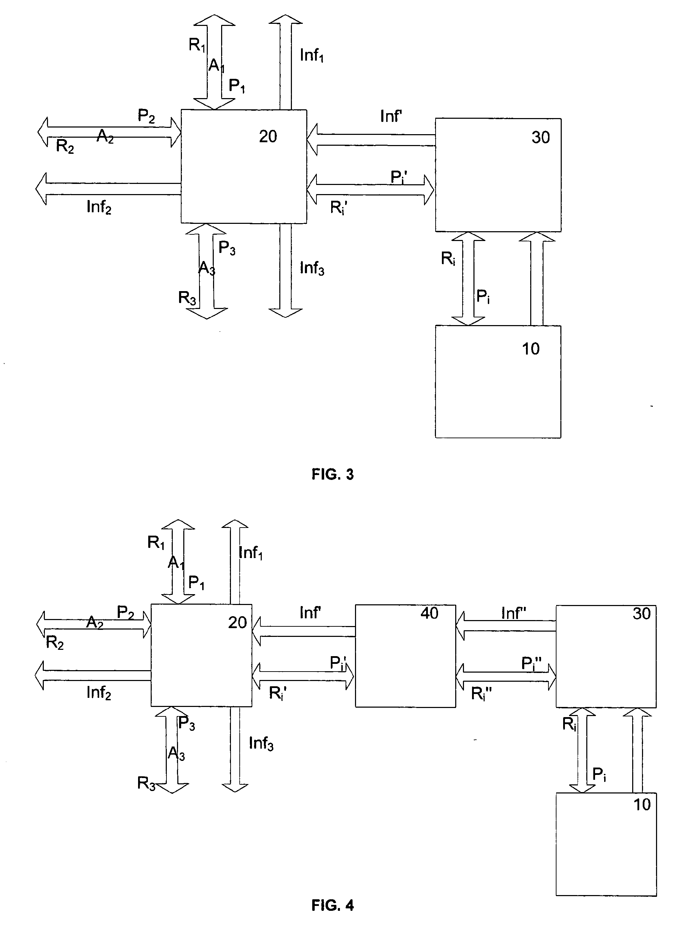

The architecture of the system can be further complicated by adding other elements, as shown in Figure 3. For instance, if it is desirable to use the U/SIM Toolkit Data Download mechanism to access the card applying the security mechanisms described in the 3GPP TS 23.048 standard, it will be necessary to add an intermediate application to the architecture that is able to implement these security mechanisms. Figure 3 shows this Protocol Adaptor Application 30.

A logic element can also be added to the system in order to increase its functionality. For instance, a table can be maintained containing all the services that the subscriber has activated, such that the subscriber can consult them at any time, or access can be secured such that it can be guaranteed that the subscriber is who he or she says they are and tries to access a terminal belonging to him or her. This gives rise to the configuration indicated in Figure 4, which shows element 40 that maintains the logic of the application.

An example of the implementation of the system is described in further detail below. It is a system that the subscriber 1 could access using any mobile terminal 2 through short messages 4, 4' or through Internet 5 (by means of a computer 3 for example). Said system offers the following services:

### Call/Video call forwarding

All calls are unconditionally forwarded to another (fixed or mobile) telephone number or to the answering machine, according to the subscriber's choice.

### Short message forwarding

Short messages are always received in the original terminal of the subscriber (not shown) and forwarded to another MSISDN and/or to an Internet page, according to the subscriber's choice.

### Information on received calls

After activating this service, the U/SIM card 7 sends a short message for each call received in the original terminal, reporting at least the calling MSISDN and the date and time of the call.

The name corresponding to the calling MSISDN rather than its number can also be sent if this name were stored in the telephone book of the U/SIM card.

The subscriber receives this information through a mobile terminal 2 (through short messages) and/or on Internet.

### Information on received short messages

After activating this service, the U/SIM card sends a short message for each short message received in the original terminal, reporting at least the source MSISDN of the received message and the date and time at which the message was received.

The name corresponding to the calling MSISDN rather than its number can also be sent if this name were stored in the telephone book of the U/SIM card.

The subscriber 1 receives this information through a mobile terminal (through short messages) and/or on Internet.

### Information on numbers in the telephone book

The subscriber provides a search pattern when this service is requested. The card performs a search of said pattern in the telephone book and the result of the search is sent through short messages.

The subscriber receives this information through a mobile terminal (through short messages) and/or on Internet.

### Making calls/Video calls

When this service is requested, the U/SIM card initiates a call to the MSISDN indicated by the subscriber. It is also possible to indicate the type of call that is to be desired to be initiated, for example, a multimedia call.

### Sending short messages

When requesting this service, the U/SIM card sends a short message with the contents indicated by the subscriber to the MSISDN also indicated by him or her.

The subscriber receives the result of sending the short message through a mobile terminal (through short messages) and/or on Internet.

### Card blocking

When requesting this service, the subscriber's card is reset requesting the PIN code again. This service is aimed at preventing the fraudulent use of a card and of the MSISDN associated thereto.

### Sending a USSD chain

When requesting this service, the USSD chain indicated by the subscriber is sent.

The following services are derived as a result of the foregoing services:

### Deactivation of the call forwarding service

The subscriber again receives calls on his or her terminal.

### Deactivation of the short message forwarding service

The subscriber's short messages are no longer forwarded to another terminal.

### Deactivation of the received call consultation service

When requesting this service, the subscriber no longer receives information on received calls.

### Deactivation of the received short message consultation service

When requesting this service, the subscriber no longer receives information on the received short messages.

As indicated, the subscriber 1 can access the system in order to send a command to his or her terminal using another mobile terminal 2 by means of sending short messages or through a Web interface.

A U/SAT applet in the U/SIM card 7 is responsible for receiving the Pi commands from the subscriber and carrying out the appropriate steps.

The system accesses the card using the U/SIM Toolkit Data Download mechanism and the security mechanisms specified in 3GPP TS 23.048 through short messages.

When the subscriber accesses the system by sending short messages, it does so through an application which will be referred to as **RAT 8** (***Remote A**ccess to **T**erminal*) application. Said application translates the commands of the subscriber received by means of short messages in requests to send secured Data Download messages (hereinafter OTA messages), containing the commands of the subscriber. Said requests to send short messages are addressed to an application that is able to implement the Data Download and 3GPP TS 23.048 mechanisms and is called **OTA 9** application.

When the subscriber **1** accesses the system using Internet 5, a Web application communicates with the **RAT** application through http in order to make the subscriber's request reach it. The **RAT** application again contacts the OTA application in order to make the subscriber's command reach it and request that they be sent through OTA messages.

Once the OTA messages are received by the U/SAT applet and the tasks required for complying with the sent command have been carried out, the U/SAT applet can send the result through a short message.

On the other hand, some of the services offered by the system may require the U/SAT applet to send information to the system during the time that the service is activated. For instance, the received call information service would cause the U/SAT applet to send a short message every time a call was received in the terminal.

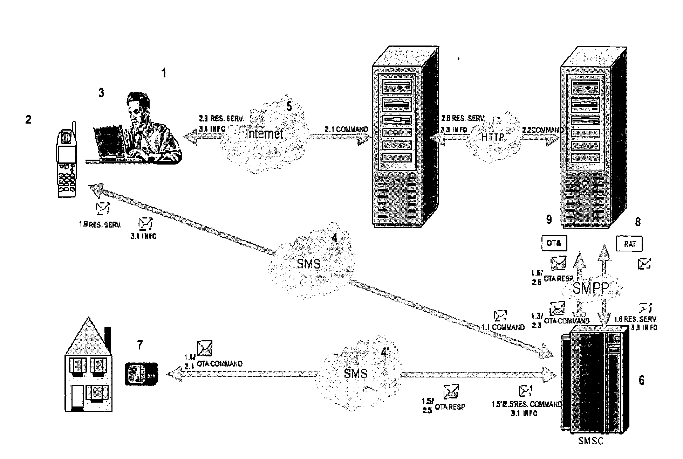

Figure 5 shows this example architecture of the system and its operation in the three situations described:
1.- The subscriber 1 requests a service through a mobile telephone 2.
2.- The subscriber 1 requests a service through Internet 5.
3.- The subscriber 1 receives information relating to the requested service.

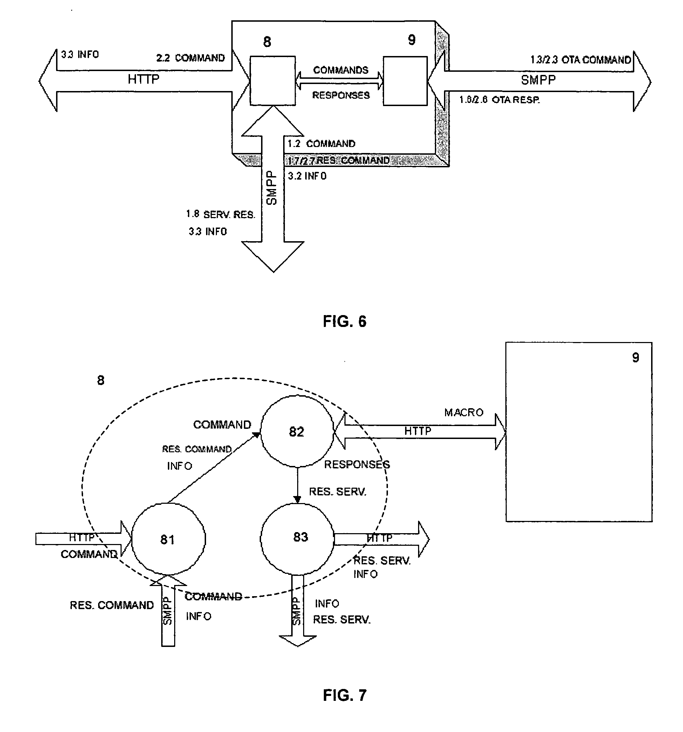

Figure 6 shows in further detail the operation of the RAT and OTA applications, explained below.

In case 1, when the subscriber requests the service through a mobile terminal, the operation is as follows:

The subscriber 1 sends to the system the command associated to the desired service through a short message [step 1.1], the SMSC 6 receives said short message and delivers it to the RAT application 8 [step 1.2]. The RAT application 8 translates the received command in a request to send an OTA message and asks the OTA application 9 to send it. The OTA application sends the requested command [step 1.3] delivered by the SMSC 6 [step 1.4].

The U/SAT application in the U/SIM card 7 processes the command and may return:
- the result of processing the Data Download message from the point of view of the 3GPP TS 23.048 security mechanisms [step 1.5]. The response is sent using these same security mechanisms.
- and/or the result of performing the tasks associated to the service requested by the subscriber in a short message [step 1.5'].

The OTA response is delivered by the SMSC 6 to the OTA application [step 1.6] which in turn delivers the result data to the RAT application 8 and the result of the operations is delivered directly to the RAT application 8 [step 1.7].

The subscriber 1 is informed of the result of the requested service through a short message sent by the RAT application 8 [step 1.8] and delivered by the SMSC 6 [step 1.9].

In case 2, when the subscriber requests the service through Internet:

The subscriber 1 selects the desired service on a Web page [step 2.1]. The Web application asks the RAT application 8 to send the corresponding command through http [step 2.2]. The RAT application 8 translates the received command into a request to send an OTA message and asks the OTA application 9 to send it. The OTA application 9 then sends the requested command [step 2.3] which is delivered by the SMSC 6 [step 2.4].

The U/SAT application in the U/SIM card 7 processes the command and may return:
- the result of processing the Data Download message from the point of view of the 3GPP TS 23.048 security mechanisms [step 2.5]. The response is sent using these same security mechanisms.
- and/or the result of performing the tasks associated to the service requested by the subscriber in a short message [step 2.5'].

The OTA response is delivered by the SMSC 6 to the OTA application 9 [step 2.6] which in turn delivers the result data to the RAT application 8 and the result of the operations is delivered directly to the RAT application 8 [step 2.7].

The RAT application 8 sends the result of the requested service to the Web application through http [step 2.8]. The subscriber 1 is informed of the results of the requested service on the Web page [step 2.9].

In case 3, when the subscriber 1 receives information relating to the requested service:

The following services would generate this type of information:
1.- Short message forwarding - the forwarded messages are received.
2.- Information on received calls - the MSISDN information and the time of the received calls are received.
3.- Information on short messages - the MSISDN information and the time of the received messages are received
4.- Contact search -information on the contacts found with the pattern specified by the subscriber is received.

When the U/SAT applet in the card has this information, it sends it using short messages [step 3.1], the SMSC 6 delivers said short messages to the RAT application 8 [step 3.2]. The RAT application 8 is responsible for forwarding this information to the mobile telephone 2 from which the subscriber 1 launched the request [step 3.3] (if this were the case), the SMSC 6 delivers it [step 3.4] and to the Web application [step 3.3]. The subscriber 1 always has this information available through the Web page [step 3.4].

Access to the system can be carried out through a mobile terminal 2. In this case, all the services offered can be activated and deactivated using a mobile terminal 2. To do so, the subscriber must send a short message with an identifier of the corresponding command. A possible example of the content of the messages to be sent so as to request each one of the services is shown below:

| **Service** | **Command** |
|---|---|
| Call forwarding | AR DL [source MSISDN] [Key] [recipient MSISDN] |
| Short message forwarding | AR DM [source MSISDN] [Key] |
| Information on calls | AR IL [source MSISDN] [Key] |
| Information on messages | AR IM [source MSISDN] [Key] |
| Telephone book consultation | AR CC [source MSISDN] [Key] [Search pattern] |
| Setting up a call | AR LL [source MSISDN] [Key] [CCP] |
| Sending short messages | AR EM [source MSISDN] [Key] [recipient MSISDN][Text] |
| Sending USSD chain | AR EU [source MSISDN] [Key] [USSD chain] |
| Card blocking | AR BT [source MSISDN] [Key] |
| Call forwarding Deactivation | AR DDL [source MSISDN] [Key] |
| Message forwarding deactivation | AR DDM [source MSISDN] [Key] |
| Call info. deactivation | AR DIL [source MSISDN] [Key] |
| Message info. deactivation | AR DIM [source MSISDN] [Key] |

The "AR" tag can be used, for example, to distinguish messages requesting a service from the result or information messages sent by the U/SAT applet.

After that a literal has been used to identify the service that is to be requested (DL, DM...). The telephone number to be controlled or accessed remotely is also indicated, which telephone number has been named [source MSISDN] in the table, the subscriber's key to access the system (if necessary), and finally the data required for the service, if it is needed.

Access to the system can also be carried out through Internet 5. Access through Internet can be achieved through a Web page in which the subscriber can indicate the desired service and the data required to carry out the service. The http connection with the RAT application 8 can furthermore be secured using a protocol for that purpose, such as SSL.

In reference to RAT application 8, it can be considered a composite of three processes (as shown in Figure 7):
- a Receiving process 81 which is permanently waiting for short messages or http packets. The received short messages can be of three types: messages containing commands from the subscriber, which can have a header with the "AR" literal, result messages sent by the U/SAT applet and which can have a header with the "ARR" literal or messages of sending information associated to a service which can have a header with the "RAT" literal.
- a main process 82 that contains the logic of the application and communicates with the OTA application.
- and an emitting process 83 that sends the results of carrying out the service and the information derived therefrom to the subscriber 1 either through short messages or through http, depending on that indicated by the main process 82.

A U/SAT application is responsible for processing the received commands. The commands are received through the U/SAT SMS-PP Data Download mechanism and formatted according to the secure transport protocol specified in the 3GPP TS 23.048 standard. Once the messages are processed form the point of view of this secure protocol, a response regarding the correct reception and format of these messages can be sent by the U/SIM card 7.

Once the command data are received, the application can act in the following manner:
1.- It can verify that the sent command is one of the commands recognized by the applet and if it is not recognized, it can send a response reporting this fact to the RAT application.
2.- It can verify that the terminal is able to support carrying out the tasks associated to said command, otherwise, it can send a response reporting this fact to the RAT application.
3.- If it is a known command, it takes the appropriate actions according to the command in question.
4.- And once said actions are carried out, it can send a short message to the RAT application containing the result of performing them.

The manner in which the application or U/SAT applet carries out some of the services that could be provided to the subscriber are described in further detail below:

### Call forwarding

All calls are unconditionally forwarded to another telephone number or to the answering service according to whether or not a recipient MSISDN is indicated as command data.

To carry out this command, the U/SAT applet can send a SEND USSD/SEND SS proactive command with the corresponding USSD/SS chain and return the result of performing this to the RAT application.

### Short message forwarding

The U/SAT applet can be registered to the EVENT_UNFORMATTED_SMS_PP_UPD event when receiving this command, such that it were informed every time a short message was going to be updated in the short message file of the U/SIM card.

Then, after receiving a message and provided that the terminal updates said massage in the short message file of the card, the U/SAT applet sends a short message to the RAT application using the SEND SHORT MESSAGE proactive command.

The short message sent contains the same data field as the original message, as well as a reference text containing information on the source MSISDN of the message and the date and time of message reception. If the data field of the message exceeds the maximum size allowed for a short message when the reference text is added more than one short message must be sent.

The value of the source MSISDN is obtained from the TP-OA field of the received short message.

In order to obtain the information on the date and time of message reception, the U/SAT applet can send to the terminal a PROVIDE LOCAL INFORMATION command programmed with the option: *"Obtain current date, time and time zone".*

The U/SAT applet can also search for the name corresponding to the source MSISDN, if it is stored in the telephone book of the U/SIM card, and return its value instead of the MSISDN.

### Information on received calls

When this command is received, the U/SAT applet can be registered to the "EVENT_EVENT_DOWNLOAD_MT_CALL" event, such that it is notified by the terminal every time a call set-up request is received.

After this moment, every time a call is received, the terminal notifies the applet further providing it with the calling MSISDN, if it is sent by the network.

The U/SAT applet sends a short message to the RAT application indicating the calling MSISDN (if it is sent by the terminal) and the date and time of the call using the SEND SHORT MESSAGE proactive command.

To obtain the date and time information, the U/SAT applet would use the PROVIDE LOCAL INFORMATION proactive command programmed with the option: *"Obtain current date, time and time zone".*

The U/SAT applet can also search for the name corresponding to the source MSISDN, if it is stored in the telephone book of the U/SIM card, and return its value instead of the MSISDN.

### Information on received short messages

The U/SAT applet can be registered to the "EVENT_UNFORMATTED_SMS_PP_UPD" event when this command is received such that it is notified every time a short message is going to be updated in the short message file of the U/SIM card.

Then, after receiving a message and provided that the terminal updates the message in the short message file, the U/SAT applet sends a short message to the RAT application using the SEND SHORT MESSAGE proactive command.

The short message sent contains information on the source MSISDN of the message and the date and time of message reception.

The valor of the source MSISDN is obtained from the TP-OA field of the received short message. To obtain information on the date and time of message reception, the U/SAT application sends to the terminal a PROVIDE LOCAL INFORMATION command programmed with the option: *"Obtain current date, time and time zone".*

The U/SAT applet can also search for the name corresponding to the source MSISDN, if it is stored in the telephone book of the U/SIM card, and return its value instead of the MSISDN.

### Information on contacts

The U/SAT application receives a search pattern as command data.

The U/SAT application performs a search in the telephone book file.

If any problem occurs during the search for the pattern in the telephone book file, it sends a short message to the RAT application reporting this fact.

If the U/SAT application finds coincidences, it sends the data relating to the found contacts through short messages to the RAT application. If it does not find any coincidence, the U/SAT application also sends a short message to the RAT application reporting this fact.

### Call set-up

When this command is received, the U/SAT application makes a call to the recipient MSISDN indicated in the command and with the configuration parameters received in the field [CCP]. This field may contain values such as "Media" to indicate that the call that is to be set up is a multimedia call.

The U/SAT applet uses the SETUP CALL proactive command to set up the call and reports the result of setting up the call to the RAT application sending a short message using the SEND SHORT MESSAGE proactive command.

### Sending a short message

When this command is received, the U/SAT applet sends a short message to the indicated MSISDN and with the text indicated by the subscriber. To do so it uses the SEND SHORT MESSAGE proactive command and reports the result of sending the short message to the RAT application by sending a short message using the SEND SHORT MESSAGE proactive command.

### Card blocking

When this command is received, the U/SAT applet can send to the terminal the REFRESH proactive command with the option "SIM Reset", such that the terminal resets the U/SIM card, making it request the PIN code again, if it is enabled. The U/SAT applet can report the result of the operation to the RAT application.

### Sending USSD

When this command is received, the U/SAT applet sends the USSD chain indicated by the subscriber using the SEND USSD proactive command. The result of sending it is sent to the RAT application using the SEND SHORT MESSAGE proactive command.

### Call forwarding deactivation

When this command is received, the U/SAT application sends the appropriate USSD/SS chain to activate the forwarding. To do so it uses the SEND USSD/SEND SS proactive command and reports the result of performing the command to the RAT application by sending a short message.

### Short message forwarding deactivation

When this command is received, the U/SAT applet eliminates its registration to the "EVENT_UNFORMATTED_SMS_PP_UPD" event and reports this to the RAT application by sending a short message.

### Deactivation of the information on calls service

When this command is received, the U/SAT application eliminates its registration to the "EVENT_EVENT_DOWNLOAD_MT_CALL" event and reports this to the RAT application by sending a short message.

### Deactivation of the information on short messages service

When this command is received, the U/SAT applet eliminates its registration to the "EVENT_UNFORMATTED_SMS_PP_UPD" event and reports this to the RAT application by sending a short message.

## Claims

1. A system of remote access to mobile telephony services of a mobile equipment, said mobile equipment comprising at least one mobile terminal and one smart card (7), and comprising a resident application (10) in said mobile equipment,
**characterized in that** the system comprises:
- means of receiving at least one command Pi relating to a mobile telephony service sent by a subscriber (1) of said mobile equipment,
- means of processing said at least one command,
- means of performing at least one task so as to provide said subscriber of said mobile equipment said required service.

2. - A system according to claim 1, **characterized in that** it further comprises accessing and/or managing subscriber data stored in said mobile equipment.

3. - A system according to any of the previous claims, **characterized in that** it comprises means of sending a result related to said processing.

4. - A system according to any of claims 1 or 3, **characterized in that** it comprises means of sending information relating to said required mobile telephony service.

5. - A system according to any of claims 1 or 2, **characterized in that** it comprises means of sending information relating to said subscriber data.

6. - A system according to any of the previous claims, **characterized in that** it further comprises access adaptation means (20), configured so as to receive said at least one command, adapting said command to a pre-established single format and forwarding said at least one adapted command to said application (10).

7. - A system according to any of the previous claims, **characterized in that** the system further comprises protocol adaptation means (30) configured so as to implement a pre-established protocol.

8. - A method for the remote access of a mobile equipment to mobile telephony services, said mobile equipment comprising at least one mobile terminal and one smart card (7), and comprising a resident application (10) in said mobile equipment,
**characterized in that** the method comprises:
- sending to said application (10) at least one command Pi relating to a mobile telephony service required by a subscriber (1) of said mobile equipment,
- processing said at least one command on the part of said application (10),
- executing at least one task so as to provide said subscriber of said mobile equipment with said required service.

9. - A control method according to claim 8, **characterized in that** it further comprises accessing and/or managing subscriber data stored in said mobile equipment.

10. - A control method according to any of claims 8-9, **characterized in that** it further comprises sending to said subscriber a result of processing said at least one command.

11. - A control method according to any of claims 8 or 10, **characterized in that** it further comprises sending information relating to said required mobile telephony service.

12. - A control method according to any of claims 8 or 9, **characterized in that** it further comprises sending information relating to said subscriber data.

13. - A control method according to any of claims 8-12, **characterized in that** it further comprises adapting said at least one command to a pre-established single format before sending it to said application.

14. - A control method according to any of claims 8-13, **characterized in that** in the case in which the U/SIM Toolkit Data Download mechanism is used to access the application, it further comprises implementing security mechanisms.
